Europäisches Patentamt

European Patent Office

Office européen des brevets

(11) Numéro de publication: **0 300 930**
A1

## (12) DEMANDE DE BREVET EUROPEEN

(21) Numéro de dépôt: **88420249.0**

(22) Date de dépôt: **13.07.88**

(51) Int. Cl.⁴: **H 01 G 1/01**
H 01 G 1/017

(30) Priorité: **15.07.87 FR 8710252**

(43) Date de publication de la demande:
**25.01.89 Bulletin 89/04**

(84) Etats contractants désignés:
**BE CH DE ES GB IT LI SE**

(71) Demandeur: **BELIER INDUSTRIES
56, Avenue Georges Clémenceau
F-69230 Saint Genis Laval (FR)**

(72) Inventeur: **Gizolme, Alain
Chemin de l'Hôpital Sainte Consorce
F-69260 Charbonniere (FR)**

**Aldeguer, Jean-Bernard
7 Avenue de Gadagne
F-69230 Saint Genis Laval (FR)**

(74) Mandataire: **Monnier, Guy et al
Cabinet Monnier 150 Cours Lafayette B.P. 3058
F-69393 Lyon Cédex 03 (FR)**

(54) Feuille diélectrique métallisée pour la réalisation de condensateurs du type bobine, ainsi que condensateurs obtenus.

(57) La zone longitudinale (5) qui réunit les créneaux transversaux (4) le long du bord surépaissi (2) et qui est destinée à fondre avant que les compartiments métallisés (4) ne soient endommagés à la suite d'un claquage lors de la première mise sous tension du condensateur obtenu, est réalisée en un métal ou alliage différent de celui qui forme les compartiments et le bord précités.

Fig. 1

EP 0 300 930 A1

Bundesdruckerei Berlin

## Description

On sait que les condensateurs électriques du type bobiné sont ordinairement réalisés par enroulement sur elles-mêmes de deux feuilles diélectriques dont chacune est formée par un film-support souple en papier ou en matière synthétique et par des armatures conductrices. A l'heure actuelle, ces armatures sont obtenues en déposant, par exemple par vaporisation, sur l'une des faces du film-support une fine couche de métal, laquelle couche peut être ensuite soumise à un traitement pour obtenir un dessin sur lesdites armatures.

En pratique, chaque feuille présente le long de l'un de ses bords longitudinaux une bande non métallisée ou marge découverte, alors qu'au niveau du bord opposé la couche de métal peut comporter au contraire une forte épaisseur. Par ailleurs, afin de faciliter l'auto-régénération ou cicatrisation, il est prévu d'étroites bandes non métallisées de séparation ou créneaux, qui s'étendent transversalement en définissant ainsi des compartiments séparés. Enfin, et toujours dans le but d'améliorer l'auto-régénération, prévoit-on sur la feuille une ou plusieurs bandes non métallisées, orientées longitudinalement et présentant un profil discontinu, afin de déterminer une série de pontets de liaison fusibles aptes à limiter l'énergie 1/2 CV2 à une valeur acceptable en cas de claquage du diélectrique.

Ces bandes interrompues posent en pratique un problème de réalisation assez délicat. Aussi, dans la Demande de Brevet français N⁰ 86 06229 déposée le 25 Avril 1986 au nom de la Demanderesse, a-t-on proposé de remplacer cette bande discontinue par une zone étroite établie à une épaisseur de métal très réduite, ladite zone, directement obtenue en continu lors de la métallisation de la face envisagée du film-support, étant orientée longitudinalement le long du bord surépaissi afin d'intersecter les créneaux de compartimentation.

On conçoit qu'on réalise de la sorte une zone longitudinale qui, en cas de claquage du diélectrique, est susceptible de fondre en atteignant sa température de fusion pour une valeur de courant limitée. Une telle fusion provoque la disparition de la zone intéressée avant que le reste de la métallisation soit endommagé.

La présente invention a pour objet une autre forme de réalisation d'une telle zone fusible.

Conformément à l'invention, on fait comporter au film-support, le long du bord métallisé surépaissi, une zone longitudinale qui est constituée en un métal ou alliage métallique différent de celui qui recouvre le restant de la surface dudit film-support, ce métal ou alliage étant choisi de façon à présenter une fusibilité supérieure à celle du métal constituant la métallisation.

Le résultat obtenu est identique à celui décrit dans la Demande de Brevet N⁰ 86 06229 précitée, alors que la fabrication des feuilles diélectriques est simplifiée.

Le dessin annexé, donné à titre d'exemple, permettra de mieux comprendre l'invention, les caractéristiques qu'elle présente et les avantages qu'elle est susceptible de procurer :

Fig. 1 est une coupe à échelle très agrandie montrant de manière schématique une feuille diélectrique établie conformément à la présente invention.

Fig. 2 illustre de la même manière une variante.

Sur ce dessin le film-support souple, par exemple en papier, a été référencé 1 et comporte sur l'une de ses faces une couche métallisée qui présente, le long du bord longitudinal opposé à celui (non représenté) occupé par la marge découverte usuelle, une surépaisseur propre à déterminer le bord surépaissi 2. Comme à l'accoutumée, cette couche métallisée est interrompue à des intervalles réguliers par des bandes transversales ou créneaux 3 qui définissent une série de compartiments séparés 4.

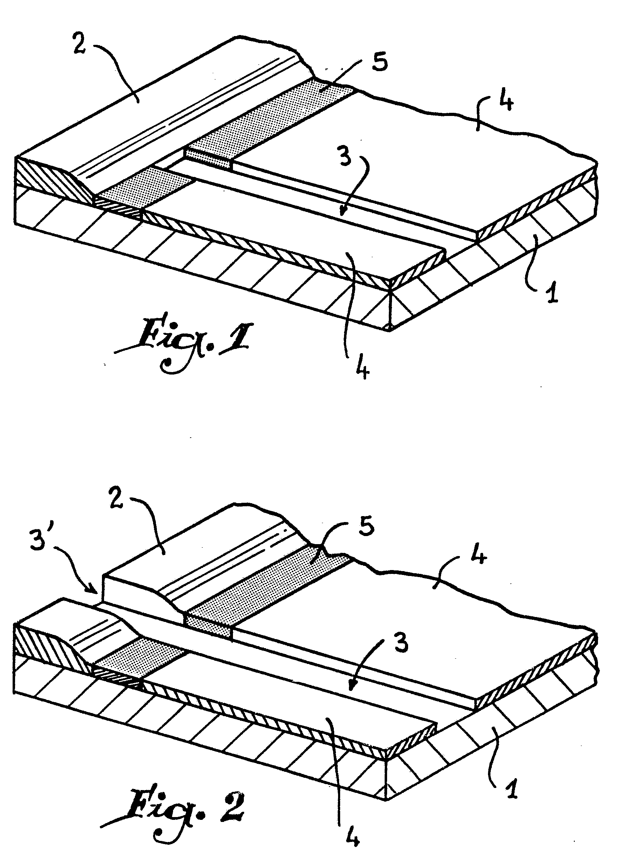

Conformément à l'invention et comme illustré en fig. 1, on prévoit le long du bord surépaissi 2 une zone longitudinale 5 qui est constituée par une couche métallisée en un métal ou en un alliage différent de celui qui forme les compartiments 4 et ledit bord 2, étant observé que le métal ou alliage choisi pour cette bande 5 présente une fusibilité supérieure à celle du métal qui constitue la métallisation.

Pour illustrer ce qui précède par un exemple précis qui ne comporte toutefois aucun caractère limitatif, si les compartiments 3 et le bord surépaissi 2 sont réalisés en zinc ou en aluminium, la bande longitudinale 4 pourra être obtenue par une couche d'argent présentant une épaisseur substantiellement équivalente.

On comprend que lors d'un claquage du condensateur bobiné obtenu, à la façon usuelle, par enroulement de deux feuilles diélectriques dont l'une au moins est conforme à l'invention, disposées de manière inversée avec un léger décalage transversal, la zone longitudinale 5 disparaît par fusion avant que le reste de la métallisation soit endommagé par le simple passage du courant de défaut résultant du claquage, en permettant de la sorte l'isolement de la portion qui est comprise entre deux créneaux 3 successifs et qui est le siège du claquage, dans des conditions très voisines de celles obtenues à l'aide de la zone à faible épaisseur suivant la Demande de Brevet N⁰ 86 06229, puisqu'il s'agit dans les deux cas de faire comporter une discontinuité à la couche conductrice en métal.

La variante suivant fig. 2 ne se distingue de la forme de réalisation illustrée en fig. 1 que par le fait que les créneaux 3 se prolongent en 3' au-delà de la zone 5 pour intéresser le bord surépaissi 2, en facilitant ainsi le nettoyage des créneaux par application de tension entre deux créneaux successifs, car l'isolement est parfois douteux par suite de la présence d'ilots.

On conçoit en particulier que l'invention englobe non seulement les feuilles diélectriques métallisées du type sus-décrit, mais également les condensateurs bobinés obtenus à partir de telles feuilles.

## Revendications

1. Feuille diélectrique métallisée pour la réalisation de condensateurs du type bobiné, du genre comprenant un film-support (1) revêtu, sur l'une de ses faces, d'une couche de métal qui définit un bord surépaissi (2) et une série de compartiments (4) séparés les uns des autres par des créneaux transversaux (3) qui le long du bord surépaissi (2) sont réunis les uns aux autres par une zone longitudinale conductrice (5) propre à fondre sous l'effet de la décharge créée par un éventuel claquage du diélectrique, avant que le reste de la couche métallisée soit lui-même endommagé, caractérisée en ce que la zone longitudinale (5) est réalisée en un métal ou alliage différent de celui du reste de la couche et présentant une fusibilité supérieure à celle du métal constituant la métallisation.

2. Condensateur bobiné, du genre obtenu par enroulement de feuilles diélectriques métallisées, caractérisé en ce qu'il est réalisé à l'aide d'au moins une feuille suivant la revendication 1.

*Fig. 1*

*Fig. 2*

0300930

Office européen
des brevets

**RAPPORT DE RECHERCHE EUROPEENNE**

Numero de la demande

EP 88 42 0249

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 867 889 (R. BOSCH GmbH) --- | | H 01 G 1/01 H 01 G 1/017 |
| A | FR-A-2 579 366 (L.C.C.-C.I.C.E. COMPAGNIE EUROPEENNE DE COMPOSANTS ELECTRONIQUES) --- | | |
| A | FR-A-1 058 368 (R. BOSCH GmbH) ----- | | |

DOMAINES TECHNIQUES
RECHERCHES (Int. Cl.4)

H 01 G

Le présent rapport a été établi pour toutes les revendications

| Lieu de la recherche | Date d'achèvement de la recherche | Examinateur |
|---|---|---|
| LA HAYE | 20-10-1988 | SCHUERMANS N.F.G. |